# EUROPEAN PATENT APPLICATION

(11) **EP 4 417 488 A1**
(43) Date of publication of application: **21.08.2024**
(21) Application number: 23156671.2
(22) Date of filing: 15.02.2023
(51) Int. Cl.: B62D 5/09, B62D 5/06, B62D 5/24, B62D 5/065

(54) **STEERING SYSTEM FOR A COMMERCIAL VEHICLE, COMMERCIAL VEHICLE WITH A STEERINGSYSTEM AND METHOD FOR OPERATING A STEERING SYSTEM**

(71) Applicant: KNORR-BREMSE Systeme für Nutzfahrzeuge GmbH, 80809 München (DE)
(72) Inventor: MESZAROS, Nora, 9721 Gencsapáti (HU); GYURKO, Zoltán, 1047 Budapest (HU); NEMETH, Huba, 1116 Budapest (HU); STRAUB, Kornel, 2013 Pomáz (HU); HEIMBROCK, Peter, 42929 Wermelskirchen (DE); EIGENMANN, Jörg Gerhard, 77855 Achern (DE)

(57) **Abstract**

A steering system (100) for a commercial vehicle (CV) includes a wheel interface (105), an electrohydraulic steering gear (110), and a steering control interface (115). The wheel interface (105) is an interface to a steering linkage with at least one wheel (120) of the utility vehicle (commercial vehicle), wherein the wheel interface (105) is connected or connectable to the steering linkage and/or wheel (120). The electrohydraulic steering gear (110) is configured to effect hydraulic power transmission to the wheel interface (105) for steering the wheel (120). The steering control interface (115) is an interface to a steering control device of the commercial vehicle (commercial vehicle), wherein the steering control interface (115) is electrically or electronically connected or connectable to the steering control device for adjusting an actuating force for the hydraulic power transmission with the electrohydraulic steering gear (110).

## Description

The present invention relates to a steering system for a commercial vehicle, a commercial vehicle with a steering system and a method for operating a steering system.

Today, two main technologies are used for power transmission in power steering systems, electromechanical and electrohydraulic. WO 2022175120 A1 discloses an electrohydraulic power steering system for a vehicle, comprising a hydraulic pump, a drive, a first working line, a second working line and a heat transfer unit.

With this in mind, the task of the present approach is to provide an improved steering system for a commercial vehicle, an improved commercial vehicle having a steering system, and an improved method for operating a steering system.

This task is solved by a steering system for a commercial vehicle, a commercial vehicle with a steering system and a method for operating a steering system with the features of the independent claims.

The advantages achievable with the presented approach are that an electrohydraulic steering system is created for commercial vehicles that does not require a mechanical coupling of a steering control device to the steered wheels.

A steering system for a commercial vehicle has a wheel interface, an electrohydraulic steering gear and a steering control interface. The wheel interface is an interface to a steering linkage with at least one wheel of the utility vehicle, wherein the wheel interface is connected or connectable to the steering linkage and/or wheel. The electrohydraulic steering gear is configured to provide hydraulic power transmission to the wheel interface for steering the wheel. The steering control interface is an interface to a steering control device of the utility vehicle, wherein the steering control interface is electrically or electronically connected or connectable to the steering control device for adjusting an actuating force for the hydraulic power transmission with the electrohydraulic steering gear.

The utility vehicle may be formed as a heavy utility vehicle, for example, a utility vehicle weighing over 3.5 tons or over 7.5 tons up to, for example, 38 tons. The wheel interface may be mechanically connected or connectable to the steering linkage and/or wheel. The steering control interface may include, for example, a steering wheel operable by a driver of the commercial vehicle. The steering control interface may be signal-transmitting and/or non-mechanically connected or connectable to the steering control device, for example without a mechanical steering column. For example, for signal transmission, the steering control interface may be connected to the steering control device only via a signal transmission capable line or wirelessly.

The steering system may be formed as a steer-by-wire system. In such a steer-by-wire system, the mechanical connection between the steering wheel of the steering control device and the steered wheels is eliminated. In other words, there is no mechanical steering column. Sensors monitor steering movements, and inputs are transmitted electrically or electronically to the steering gear. Advantageously, a mechanical steering column can thus be dispensed with completely.

According to one embodiment, the steering gear may comprise a hydraulic piston designed to exert the actuating force for power transmission. For example, the hydraulic piston may be designed to exert the actuating force for the power transmission from a pressure difference on two sides of the hydraulic piston. Such a piston is suitable for effecting the hydraulic power transmission.

The steering gear may further comprise a hydraulic pump configured to act on the hydraulic piston to operate the hydraulic piston. For example, the hydraulic pump may be configured to act on both sides of the hydraulic piston to move the hydraulic piston by creating a pressure difference on the two sides of the hydraulic piston to operate the hydraulic piston. Such a hydraulic pump is adapted to cause a hydraulic force to act on the hydraulic piston to, in turn, cause the hydraulic force to be transmitted.

It is further advantageous if, according to one embodiment, the steering gear comprises an electric motor adapted to directly or indirectly drive the hydraulic pump. Such an electric motor can ensure operation of the hydraulic pump.

The hydraulic pump may be formed as a positive displacement pump, for example. The positive displacement pump may be any positive displacement pump and may comprise, for example, a gear pump with, for example, external and internal gearing and/or a scroll pump and/or rotary screws.

According to one embodiment, the steering gear may comprise a pitman arm connected between the hydraulic piston and the wheel interface. The pitman arm, which may also be referred to as a "gearbox with pitman arm," may be formed to provide a mechanical connection to the steering linkage and/or wheel.

The steering system may further comprise the steering control device electrically or electronically connected or connectable to the steering control interface, wherein the steering control device is configured to output steering commands to the steering control interface for adjusting the actuation force for the hydraulic power transmission. The steering control device may further comprise a steering wheel operable by a vehicle driver to generate the steering commands.

It is further advantageous if the steering gear according to one embodiment comprises a control unit that electronically connects the steering control device and the steering gear. Thanks to such a control unit, control of the steering commands issued by the steering control device to the steering gear can be performed.

The steering system may further comprise a power supply device adapted to supply electrical power to the steering gear, the steering control device and/or the control unit. Such a power supply device may ensure operation of the steering gear, the steering control device and/or the control unit.

According to one embodiment, the steering gear may include a recirculating ball system formed to effect a force on the hydraulic piston. For example, the recirculating ball system may be arranged and formed to effect an additional force on the hydraulic piston. To this end, the recirculating ball system may include a recirculating ball screw mechanism having, for example, a worm gear. In an exemplary embodiment, the recirculating ball system may include a screw located in a block having a threaded connection. This block may additionally be connected to a gear that moves a pitman arm, such as the pitman arm. The spindle may be rotatable in a fixed position, moving the block so that the movement can be transmitted to the wheels via the pitman arm. There may be ball bearings in the block that run back through the gearbox as it rotates. This rolling connection reduces friction and backlash in the steering gear.

The steering system may further include an electric motor configured to directly or indirectly drive a spindle of the recirculating ball system. The electric motor may be the electric motor for operating the hydraulic pump or an additional electric motor. Such an electric motor can ensure operation of the spindle.

A commercial vehicle has a steering system in one of the variants described above. Thanks to the electrohydraulic steering system, such a commercial vehicle is designed to perform a hydraulic power transmission to the steered wheels and advantageously manages without a mechanical coupling of a steering control device to the steered wheels.

A method for operating a steering system in one of the variants described above comprises a step of receiving and a step of actuating. In the step of receiving, a steering command is received electrically or electronically via the steering control interface, the steering command being configured to set an actuation force for the hydraulic transmission. In the actuating step, the electrohydraulic steering gear is actuated using the steering command to effect hydraulic power transmission to the wheel interface to at least the wheel to steer the wheel.

This method may be implemented, for example, in software or hardware or in a mixed form of software and hardware, for example, in a control unit.

The approach presented herein further creates a device that is configured to perform, control, or implement the steps of a variant of a method presented herein in corresponding devices. Also, by this embodiment variant of the approach in the form of a device, the task underlying the approach can be solved quickly and efficiently.

For this purpose, the device can have at least one computing unit for processing signals or data, at least one memory unit for storing signals or data, at least one interface to a sensor or an actuator for reading in sensor signals from the sensor or for outputting data or control signals to the actuator, and/or at least one communication interface for reading in or outputting data embedded in a communication protocol. The computing unit may be, for example, a signal processor, a microcontroller, or the like, and the memory unit may be a flash memory or a magnetic memory unit. The communication interface may be configured to read in or output data in a wireless and/or wired manner, wherein a communication interface capable of reading in or outputting wired data may read in or output such data, for example, electrically or optically from or into a corresponding data transmission line.

In the present context, a device can be understood as an electrical device that processes sensor signals and outputs control and/or data signals as a function thereof. The device can have an interface, which can be designed in terms of hardware and/or software. In the case of a hardware-based design, the interfaces can, for example, be part of a so-called system ASIC that contains various functions of the device. However, it is also possible that the interfaces are own integrated circuits or consist at least partially of discrete components. In a software-like design, the interfaces may be software modules that are present, for example, on a microcontroller alongside other software modules.

Advantageously, there is also a computer program product or computer program comprising program code which may be stored on a machine-readable carrier or storage medium such as a semiconductor memory, a hard disk memory or an optical memory and which is used to perform, implement and/or control the steps of the method according to any of the embodiments described above, in particular when the program product or program is executed on a computer or device.

Embodiments of the approach presented herein are explained in more detail in the following description with reference to the figures. Showing:
Fig. 1 a schematic representation of a commercial vehicle with a steering system according to an embodiment example;
Fig. 2 a schematic representation of a steering system according to an embodiment example;
Fig. 3 a schematic side view of a recirculating ball system of a steering system according to an embodiment example; and
Fig. 4 a flow diagram of a method according to an embodiment example for operating a steering system.

In the following description of favorable embodiments of the present approach, the same or similar reference signs are used for the elements shown in the various figures and having a similar effect, and a repeated description of these elements is omitted.

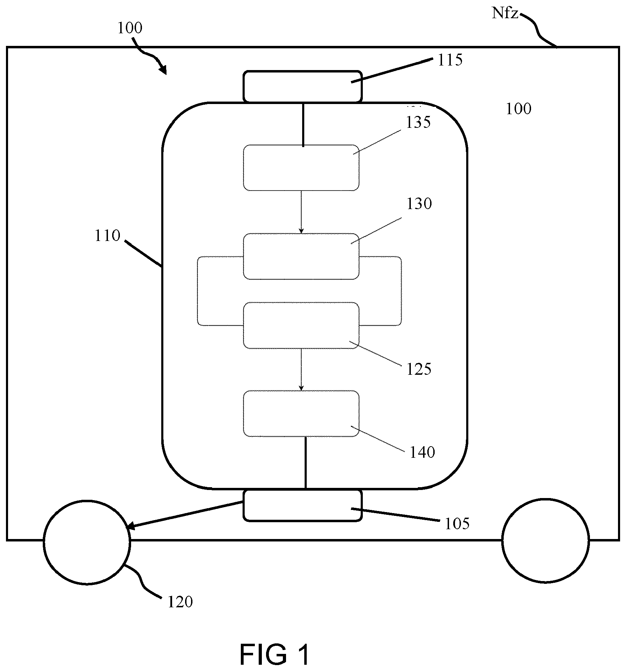

Fig. 1 shows a schematic representation of a commercial vehicle CV with a steering system 100 according to an embodiment example.

By way of example only, the steering system 100 according to this embodiment example is accommodated on or in the commercial vehicle CV, which is formed here by way of example as a heavy commercial vehicle with a weight of, for example, more than 3.5 or more than 7.5 tons up to, for example, 38 tons.

The steering system 100 includes a wheel interface 105, an electrohydraulic steering gear 110, and a steering control interface 115. The wheel interface 105 interfaces a steering linkage with at least one wheel 120 of the commercial vehicle commercial vehicle, wherein the wheel interface 105 is connected or connectable to the steering linkage and/or wheel 120. The electrohydraulic steering gear 110 is configured to effect hydraulic power transmission to the wheel interface 105 for steering the wheel 120. The steering control interface 115 is an interface to a steering control device of the commercial vehicle commercial vehicle, wherein the steering control interface 115 is electrically or electronically connected or connectable to the steering control device for adjusting an actuating force for the hydraulic power transmission with the electrohydraulic steering gear 110.

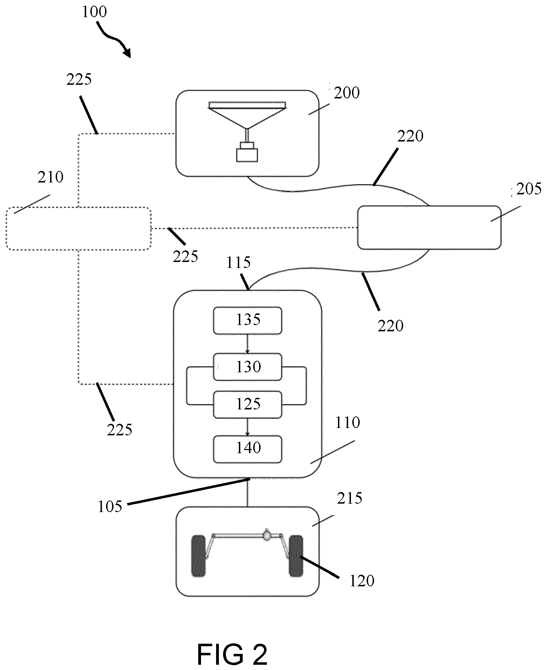

According to this embodiment, the wheel interface 105 is mechanically connected or connectable to the steering linkage and/or wheel 120. According to this embodiment example, the steering control device, see Fig. 2, comprises a steering wheel operable by a driver of the commercial vehicle CV. According to this embodiment example, the steering control interface 115 is connected or connectable to the steering control device in a signal-transmitting and/or non-mechanical manner, for example without a mechanical steering column. For signal transmission, the steering control interface 115 is, according to an embodiment example, only connected to the steering control device via a signal transmission capable line or wirelessly.

According to this embodiment example, the steering system 100 is formed as a steer-by-wire system. In the steer-by-wire system, the mechanical connection between the steering wheel of the steering control device and the steered wheels 120 is removed. In other words, there is no mechanical steering column. Sensors monitor steering movements of a steering wheel of the steering control device according to an embodiment example, and the inputs/steering commands are transmitted electrically or electronically to the steering gear 110 via the steering control interface 115 according to this embodiment example, see also Fig. 2.

According to this embodiment example, the steering gear 110 comprises a hydraulic piston 125 configured to exert the actuation force for the power transmission. For example, according to this embodiment example, the hydraulic piston 125 is configured to exert the actuation force for power transmission from a pressure difference on two sides of the hydraulic piston 125. The steering gear 110 further comprises, according to this embodiment example, a hydraulic pump 130 configured to act on the hydraulic piston 125 to operate the hydraulic piston 125. Here, for example, the hydraulic pump 130 is configured to act on both sides of the hydraulic piston 125 to move the hydraulic piston 125 by generating a pressure difference on the two sides of the hydraulic piston 125 to operate the hydraulic piston 125. For example, the hydraulic pump 130 is formed as a positive displacement pump. The positive displacement pump may be any positive displacement pump and, according to one embodiment, may comprise a gear pump with, for example, external and internal gearing and/or a scroll pump and/or rotary screws. According to this embodiment example, the steering gear 110 further comprises an electric motor 135 configured to directly or indirectly drive the hydraulic pump 130.

According to this embodiment, the steering gear 110 further comprises a pitman arm 140 connected between the hydraulic piston 125 and the wheel interface 105. According to one embodiment, the steering linkage lever 140 is formed to provide a mechanical connection to the steering linkage and/or wheel 120.

In summary, in the electrohydraulic steering system 100 disclosed herein, power transmission in the steering gear 110 between the electric actuator/motor 135 and the steered wheels 120 is via hydraulic transmission, among other possible mechanisms. In the steering system 100, according to this embodiment example, the electric motor 135 drives the hydraulic pump 130 which, according to this embodiment example, acts on the two sides of the hydraulic piston 125 by generating a pressure difference. This system of the steering gear 110 converts electrical signals into hydraulic signals and then into mechanical signals through the hydraulic piston 125. In other words, according to this embodiment, Fig. 1 shows that the electric motor 135 drives the hydraulic pump 130 which acts on the two sides of the hydraulic piston 125 by the hydraulic pump 130 generating the pressure difference. According to different embodiment examples, the hydraulic pump 130 is formed as a gear pump, external and internal, that is, a worm pump and/or a rotary pump, and is driven by the electric motor 135.

Fig. 2 shows a schematic representation of a steering system 100 according to an embodiment example. This may be the steering system 100 described on the basis of Fig. 1, with the difference that the steering system 100 according to this embodiment example comprises the steering control device 200, a control unit 205, a power supply device 210 and/or the steering linkage 215 with the wheel 120.

The steering control device 200 is electrically or electronically connected or connectable to the steering control interface 115, wherein the steering control device 200 is configured to output steering commands for adjusting the actuation force for the hydraulic power transmission to the steering control interface 115. According to this embodiment, the steering commands are transmitted to the steering control interface 115 via a control line 220. According to this embodiment example, the steering gear 110 further comprises the control unit 205 that electrically or electronically connects the steering control device 200 and the steering gear 110. According to this embodiment example, the control unit 205 is connected to the steering control device 200 via the control line 220 and to the steering control interface 115 via another control line 220. The power supply device 210 is configured to supply electrical power to the steering gear 110, the steering control device 200, and/or the control unit 205. According to this embodiment, the power supply device 210 is connected to each of the steering gear 110, the steering control device 200, and the control unit 205 via a plurality of power lines 225.

The steering system 100 disclosed herein may also be referred to as a "steer-by-wire system with hydraulic power transmission for road vehicles".

Nowadays, two main technologies are used for power transmission in power steering systems: electromechanical and electrohydraulic. The electrohydraulic way seems to be the better option. Especially in commercial vehicles, where the actuation forces are quite high, a beneficial composition can be achieved with the hydraulic transmission. In today's commercial vehicle steering systems, the most commonly used mechanism is the ball screw. The linkage used to turn the wheels 120 is different from that used in a rack-and-pinion system commonly used in passenger cars.

In known steering systems, there is a mechanical linkage between the steered wheels and the steering wheel in the vehicle that implements the driver's steering intentions.

However, as technology advances and in the context of the approach presented here, this mechanical link will be eliminated to provide greater functionality and flexibility.

With the advent of autonomous functions, vehicles are taking over more and more important driving functions from the driver. These vehicle systems require a higher level of safety and consequently multiple redundancies. The fail-safe systems that incorporate these redundancies pave the way for steer-by-wire systems.

Unlike known steering systems that use, for example, rack-and-pinion steering gears, and/or have electrohydraulic systems with a mechanical connection, the steering system 100 presented herein features the electrohydraulic steering gear 110 without a mechanical connection.

The steering gear 110 is applicable to heavy-duty vehicles without a mechanical connection to the driver and comprises a hydraulic power transmission element.

Thus, in the steer-by-wire system implemented according to this embodiment, the mechanical connection between the steering wheel of the steering control device 200 and the steered wheels 120 is eliminated. In other words, the mechanical steering column has been removed. According to one embodiment, sensors monitor the steering movements, and the inputs/steering commands are electronically transmitted to the steering gear 110. An electronically generated steering feel is fed back to the driver in accordance with an embodiment.

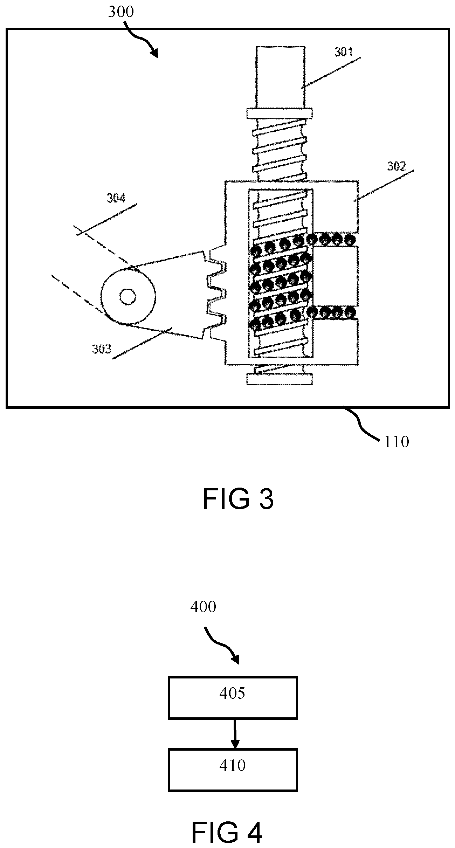

In summary, the steering system 100 presented herein in the form of a steer-by-wire system includes at least one hydraulic transmission, among possible other types, see Fig. 3, between the electric motor 135, which may also be referred to as a "servomotor," and the steered wheels 120. According to an embodiment example, the steering system 100 comprises the following components:
- the steering control device 200 in the form of a steering control subsystem with optional force feedback - There is, according to an embodiment example, a control system to be operated by the driver. According to an embodiment example, sensors are used to monitor the steering movements. The force feedback transmits the steering feel back to the driver according to an embodiment example,
- the control unit 205 in the form of a control unit - the control unit 205 controls the entire steering system 100, transmits the signals between the steering control unit 200 and the steering gear 110,
- the power supply 210,
- the steering gear 110, which includes the hydraulic transmission,
- optionally, according to one embodiment, a recirculating ball system with a recirculating ball steering gear is possible, see Fig. 3. The steering system 100, which may also be referred to as a "steering system", generates an action force on the steered wheels 120 based on the steering inputs, and/or
- a "steered wheels" subsystem that includes the steering linkage 215 with the steered wheels 120.

Overall, there is only an electronic connection and no mechanical connection between the steering and steered wheels 120 subsystems.

Shown in Fig. 2 are major components of the steering system 100 in the form of a steer-by-wire system, focusing on the lack of a direct mechanical connection between the steering control device 200 and the steered wheels 120 subsystems.

Fig. 3 shows a schematic side view of a recirculating ball system 300 of a steering system 100 according to an embodiment. This may be an embodiment example of the steering system 100 described with reference to Fig. 1 with the recirculating ball system 300.

According to this embodiment example, the steering gear 110 comprises the recirculating ball system 300 formed to effect a force on the hydraulic piston. According to this embodiment, the recirculating ball system 300 is arranged and formed to effect an additional force on the hydraulic piston. To this end, in accordance with this embodiment, the recirculating ball system 300 includes a recirculating ball screw mechanism having, for example, a worm gear. In an exemplary embodiment shown herein, the recirculating ball system 300 comprises a screw 301 located in a block 302 having a threaded connection. According to this embodiment example, this block 302 is additionally connected to a gear 303 that moves a pitman arm 304. According to this embodiment example, the spindle 301 is rotatable in a fixed position, moving the block 302 so that the movement is transmitted to the wheels of the utility vehicle via the pitman arm 304. In accordance with one embodiment, the block 302 includes ball bearings that run back through the gearbox as it rotates. This rolling connection reduces friction and backlash in the steering gear.

In other words, according to this embodiment example, the recirculating ball system 300 acts on the wheels 120 in addition to the hydraulics. In heavy-duty vehicles, such a recirculating ball system 300, which may also be referred to as a "recirculating ball steering system" or "recirculating ball steering gear", is applicable, as opposed to passenger cars where racks and pinions are used.

According to one embodiment, the steering system further comprises an electric motor configured to directly or indirectly drive the spindle 301, which may also be referred to as a "recirculating ball screw", of the recirculating ball steering system 300. According to one embodiment, the electric motor is the same electric motor for driving the hydraulic pump or, according to another embodiment, an additional electric motor.

Fig. 4 shows a flow diagram of a method 400 according to an embodiment example for operating a steering system. This may be the steering system 100 described with reference to Fig. 1, 2 or 3.

The method 400 comprises a step 405 of receiving and a step 410 of actuating. In the step 405 of receiving, a steering command is received electrically or electronically via the steering control interface, the steering command being configured to set an actuation force for the hydraulic transmission. In the step 410 of actuating, the electrohydraulic steering gear is actuated using the steering command to effect hydraulic power transmission to the wheel interface to at least the wheel to steer the wheel.

The method steps presented herein may be repeated, as well as performed in a different order than described.

Where an embodiment includes an "and/or" linkage between a first feature and a second feature, this should be read to mean that the embodiment includes both the first feature and the second feature according to one embodiment and either only the first feature or only the second feature according to another embodiment.

### REFERENCE LIST

### Commercial vehicle

100 Steering system
105 wheel interface
110 electrohydraulic steering gear
115 steering control interface
120 wheel
125 hydraulic piston
130 hydraulic pump
135 electric motor
140 Steering column lever
200 Steering control unit
205 Control unit
210 Power supply unit
215 Steering linkage
220 Control line
225 Power line
300 Recirculating ball system
301 Spindle
302 Block
303 Gear wheel
304 Pitman arm
400 Method of operating a steering system
405 Step of receiving
410 Step of driving

## Claims

1. Steering system (100) for a commercial vehicle (CV), the steering system (100) comprising:
- a wheel interface (105) to a steering linkage (215) with at least one wheel (120) of the commercial vehicle (CV), wherein the wheel interface is connected or connectable to the steering linkage (215) and/or wheel (120);
- at least one electrohydraulic steering gear (110) configured to effect hydraulic power transmission to the wheel interface (105) for steering the wheel (120); and
- a steering control interface (115) to a steering control device (200) of the utility vehicle (commercial vehicle), the steering control interface (115) being electrically or electronically connected or connectable to the steering control device (200) for adjusting an actuating force for the hydraulic power transmission with the at least one electrohydraulic steering gear (110).

2. Steering system (100) according to claim 1, **characterized in that** the steering system (100) is formed as a steer-by-wire system.

3. Steering system (100) according to any one of the preceding claims, **characterized in that** the at least one steering gear (110) comprises a hydraulic piston (125) adapted to exert the actuating force for the power transmission.

4. Steering system (100) according to claim 3, **characterized in that** the at least one steering gear (110) comprises a hydraulic pump (130) adapted to act on the hydraulic piston (125) to operate the hydraulic piston (125).

5. Steering system (100) according to claim 4, **characterized in that** the at least one steering gear (110) comprises an electric motor (135) adapted to directly or indirectly drive the hydraulic pump (130).

6. Steering system (100) according to any one of claims 4 to 5, **characterized in that** the hydraulic pump (130) is formed as a positive displacement pump.

7. Steering system (100) according to any of the preceding claims, **characterized by** the steering control device (200) being electrically or electronically connected or connectable to the steering control interface (115), wherein the steering control device (200) is adapted to output steering commands for adjusting the actuating force for the hydraulic power transmission to the steering control interface (115).

8. Steering system (100) according to claim 7, **characterized by** a control unit (205) electronically interconnecting the steering control device (200) and the at least one steering gear (110).

9. Steering system (100) according to any one of claims 7 or 8, **characterized by** a power supply device (210) adapted to supply electrical power to the at least one steering gear (110), the steering control device (200) and/or the control unit (205).

10. Steering system (100) according to any of claims 3 to 9, **characterized in that** the at least one steering gear (110) comprises a recirculating ball system (300) formed to effect a force on the hydraulic piston (125).

11. Commercial vehicle (CV) comprising a steering system (100) according to any of the preceding claims.

12. Method (400) for operating a steering system (100) according to any one of claims 1 to 10, wherein the method (400) comprises the following steps:
- Electrically or electronically receiving (405) a steering command via the steering control interface (115), wherein the steering command is configured to adjust an actuation force for the hydraulic power transmission; and
- driving (410) the at least one electrohydraulic steering gear (110) using the steering command to effect the hydraulic power transfer to the wheel interface (105) to at least one wheel (120) to steer the wheel (120).

13. Apparatus adapted to perform and/or control the steps of the method (400) according to claim 12 in respective units.

14. Computer program arranged to execute and/or control the method (400) according to claim 12.

15. Machine-readable storage medium on which the computer program according to claim 14 is stored.
